Europäisches Patentamt

European Patent Office

Office européen des brevets

(19)

(11) EP 0 880 108 A1

(12) DEMANDE DE BREVET EUROPEEN

(43) Date de publication:
25.11.1998 Bulletin 1998/48

(51) Int Cl.⁶: G06T 7/00, G06T 5/00

(21) Numéro de dépôt: 98201523.2

(22) Date de dépôt: 11.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 23.05.1997 FR 9706339

(71) Demandeur: Koninklijke Philips Electronics N.V.
5621 BA Eindhoven (NL)

(72) Inventeur: Makram-Ebeid, Shérif
75008 Paris (FR)

(74) Mandataire: Lottin, Claudine
Société Civile S.P.I.D.
156, Boulevard Haussmann
75008 Paris (FR)

(54) **Procédé de traitement d'une image incluant une étape de chainage, et appareil d'imagerie médicale incluant des moyens pour mettre en oeuvre ce procédé**

(57) Procédé de traitement d'image incluant l'acquisition (10) d'une image d'intensité (J) formée d'une matrice de points (A) munie de valeurs d'intensité non binaires, représentant des objets filiformes, et incluant des étapes de détection des objets filiformes comprenant :

une détermination automatique (20) d'un champ de vecteurs d'intensité ($\vec{V}$) formant une image d'ETATS constitués par des caractéristiques de grandeurs et d'angles [$\|\vec{V}\|$, $\theta$] des vecteurs d'intensité aux différents points (A) de l'image d'intensité, une opération de chaînage (30) des points d'un objet filiforme individuel au moyen d'un filtrage automatique [Q(i)] de l'image des ETATS qui effectue une sélection d'un champ dense et continu de vecteurs d'intensité correspondant à des points de l'objet filiforme.

Application : Appareils d'imagerie médicale

FIG. 1A

## Description

L'invention concerne un procédé de traitement d'image incluant l'acquisition d'une image d'intensité formée d'une matrice de points munie de valeurs d'intensité non binaires, représentant des objets filiformes, et incluant des étapes de détection des objets filiformes.

L'invention trouve une application dans l'industrie de fabrication des appareils de radiologie aux rayons X par exemple.

Une méthode de détection des bords est déjà connue de la publication : "IEEE TRANSACTIONS ON PATTERN ANALYSIS AND MACHINE INTELLIGENCE, vol. 14, N°9, SEPT.1992, Object Delineation in Noisy Images by a Modified Policy-Iteration Method, by Adrie C. M. Dumay, Harielle N.A.J. Claessens and alii, pp. 952-958".

Cette publication décrit un algorithme de détection de ligne de contour d'objets isolés dans des images bruitées qui est une variante d'une méthode bien connue de l'homme du métier sous le nom de programmation dynamique. La méthode de programmation dynamique s'applique sous deux conditions : c'est une méthode de recherche du chemin le plus court pour relier un groupe de points avec un coût minimal. Cette méthode a besoin d'être guidée ; elle n'est donc pas automatisable.

La présente invention a pour but de proposer un procédé de traitement d'image, tel que défini plus haut, s'appliquant sous un plus grand nombre de conditions que la méthode de programmation dynamique connue : les étapes de calcul doivent se dérouler de manière automatique ; le nombre des étapes doit être aussi faible que possible ; ces étapes doivent déterminer le chemin le plus court pour relier un groupe de points appartenant à un objet filiforme individuel, avec le coût le plus faible possible ; et le chemin choisi doit inclure le plus grand nombre possible de points de l'objet filiforme, donc être le plus long et le plus régulier possible dans l'image.

La condition selon laquelle le chemin trouvé doit inclure la plus grande densité possible de points appartenant à l'objet filiforme est inconnue de la méthode de programmation dynamique.

Selon l'invention, ce problème est résolu par un procédé de traitement d'image incluant l'acquisition d'une image d'intensité formée d'une matrice de points munie de valeurs d'intensité non binaires, représentant des objets filiformes, et incluant des étapes de détection des objets filiformes comprenant :

une détermination automatique d'un champ de vecteurs d'intensité $(\vec{V})$ formant une image d'ETATS constitués par des caractéristiques de grandeurs et d'angles $[\|\vec{V}\|,\theta]$ des vecteurs d'intensité aux différents points de l'image d'intensité,
une opération de chaînage des points d'un objet filiforme individuel au moyen d'un filtrage automatique $[Q(i)]$ de l'image des ETATS qui effectue une sélection d'un champ dense et continu de vecteurs d'intensité correspondant à des points de l'objet filiforme.

Ce procédé possède l'avantage de s'appliquer au traitement d'images médicales de rayons X, qui sont peu contrastées à l'origine, telles que des artériogrammes. Dans un artériogramme pulmonaire, ce procédé permet par exemple la segmentation automatique d'artères de différents diamètres par rapport au fond qui comprend une représentation gênante des côtes. Dans un artériogramme cérébral, ce procédé permet par exemple une segmentation automatique d'artères très enchevêtrées. D'une manière générale ce procédé offre l'avantage de permettre la détection et la reconstruction améliorées des bords ou des lignes dans de nombreux types d'objets représentés dans des images, sans condition d'origine de ces images.

Un appareil d'imagerie médicale incluant des moyens pour mettre en oeuvre ce procédé comprend :

un système d'acquisition de données de représentation d'une image sous forme d'une matrice bidimensionnelle de points ayant des valeurs d'intensités non binaires, repérés par leurs coordonnées dans la matrice,
un système de traitement d'image comprenant un microprocesseur ayant accès aux données de représentation de l'image et munis de moyens pour mettre en oeuvre les étapes du procédé,
et un système d'affichage et/ou d'enregistrement des données d'image acquises et/ou traitées par le procédé.

Un procédé, et un appareil pour mettre en oeuvre ce procédé sont décrits ci-après en détail, illustrés par les figures schématiques annexées parmi lesquelles :

les FIGS 1A et 1B illustrent le procédé par des diagrammes de blocs fonctionnels,
les FIGS 2A et 2B illustrent des déterminations d'ETATS,
la FIG.3 illustre la discrétisation de la caractéristique d'angle, dans la détermination d'ETATS,
les FIGS.4A à 4D montrent un exemple de balayage automatique de l'image des ETATS,
les FIGS.5A, 5B représentent des secteurs de recherche,
la FIG.6 illustre un pistage par le procédé,
la FIG.7A montre un artériogramme original, et la FIG.7B montre cet artériogramme traité selon le procédé pour chaîner les points de bords de vaisseaux,
la FIG.8 montre un appareil à rayon X mettant en oeuvre le procédé.

## PROCEDE

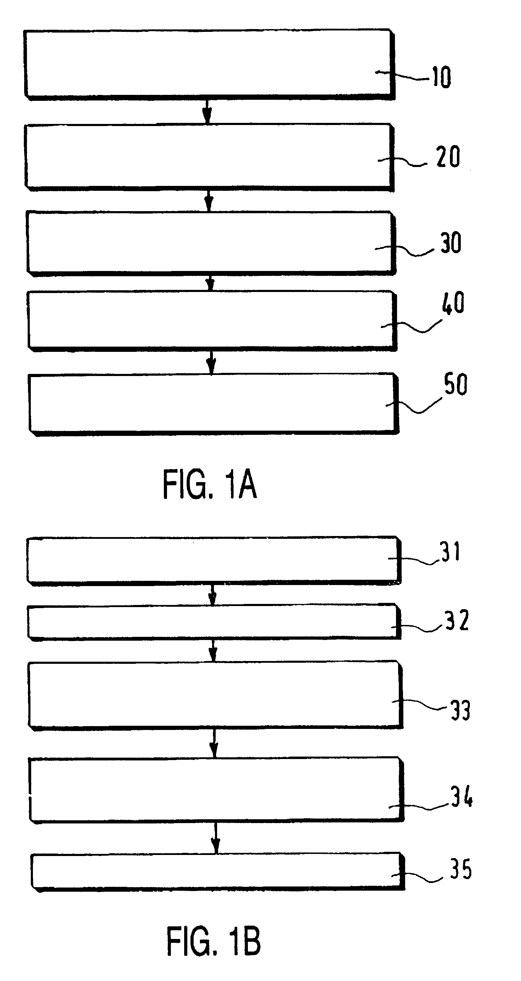

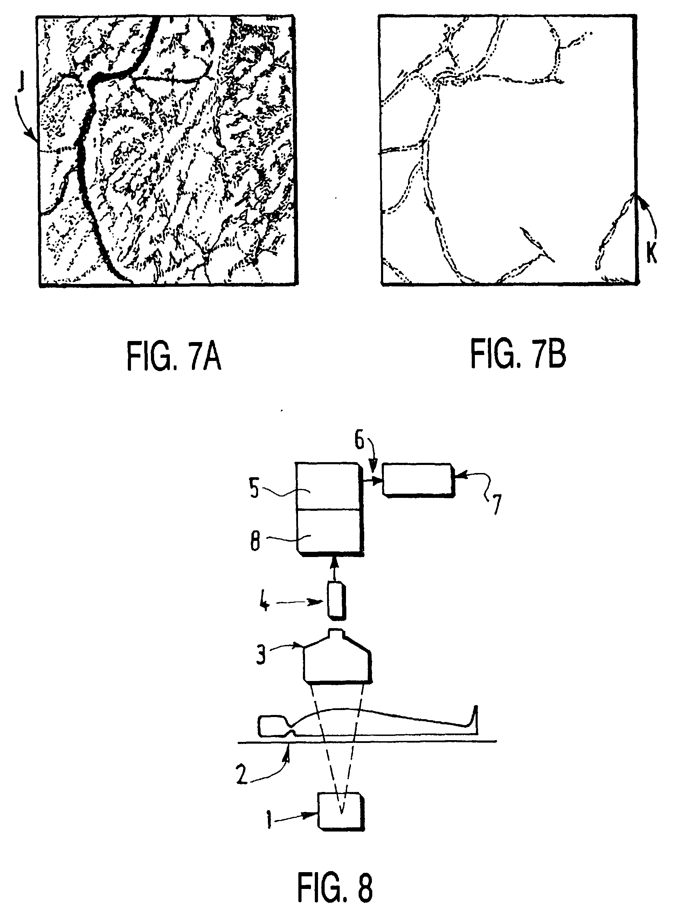

Le procédé décrit ci-après est illustré par les FIGS. 1A et 1B sous forme de diagrammes de blocs fonctionnels, et concerne d'une manière générale le traitement d'une image d'intensité non binaire, appelée image originale J, telle que montrée à titre d'exemple sur la FIG. 7A, représentant des objets filiformes. Les objets filiformes peuvent être, à titre d'exemple, des bords d'objets, des arêtes, des lignes de centre d'objets. Ce procédé comprend des étapes de traitement appliquées à cette image originale J et incluant au moins une étape de chaînage 30 de pixels appartenant à un objet filiforme. Le procédé comprend en outre favorablement une étape de pistage 40 de chaque objet filiforme individuellement dans l'image K tel qu'illustré par la FIG.7B.

En référence à la FIG.1A, le procédé comprend :

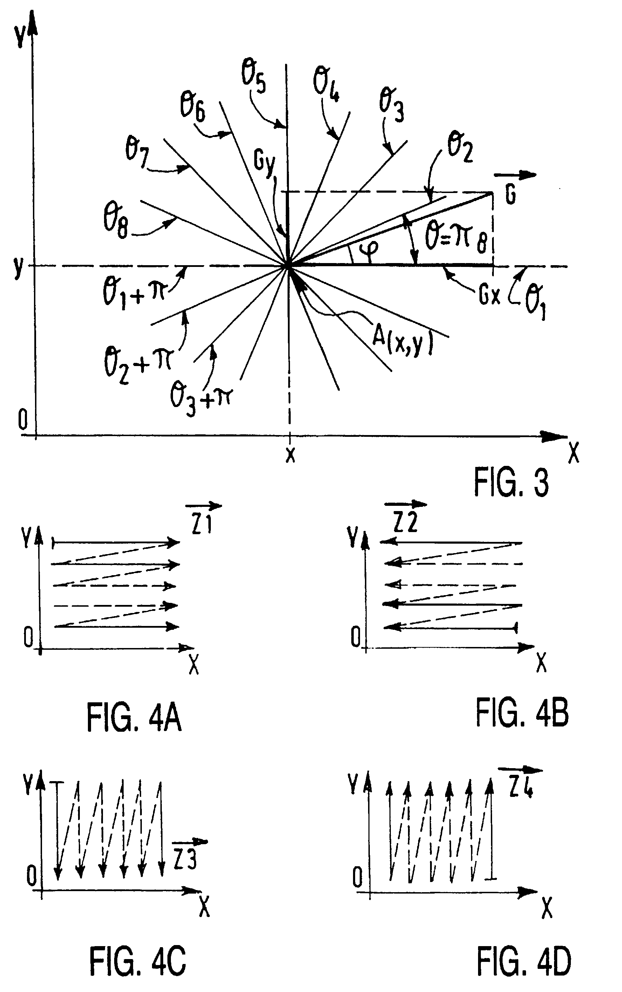

1) une première étape préliminaire 10 d'acquisition de l'image originale J à traiter. Cette image originale J peut être acquise sous forme d'une matrice bidimensionnelle de pixels ou de points. En référence aux FIGS.3A, 3B, chaque pixel A est muni de coordonnées x,y de localisation dans la matrice de l'image J par rapport à des axes de coordonnées $\overrightarrow{OX}$, $\overrightarrow{OY}$ et est muni d'une valeur d'intensité non binaire I(x,y), qui peut être mesurée ou calculée. Le procédé n'est pas limité au traitement d'images bidimensionnelles, mais peut aussi être appliqué par exemple au traitement d'images tridimensionnelles, obtenues par le moyen de systèmes d'imagerie particuliers qui permettent de former des images de volumes. L'homme du métier est en mesure de généraliser facilement le procédé décrit à titre d'exemple pour une image bidimensionnelle à une image tridimensionnelle.

2) une seconde étape préliminaire 20 de détermination en chaque pixel A de caractéristiques descriptives de la valeur d'intensité de ce pixel A par rapport aux valeurs d'intensité des pixels de son environnement. Ces caractéristiques appelées ci-après "ETAT" comprennent les coordonnées de localisation x,y du pixel A associées à des caractéristiques locales orientées d'intensité déterminées de manière automatique.

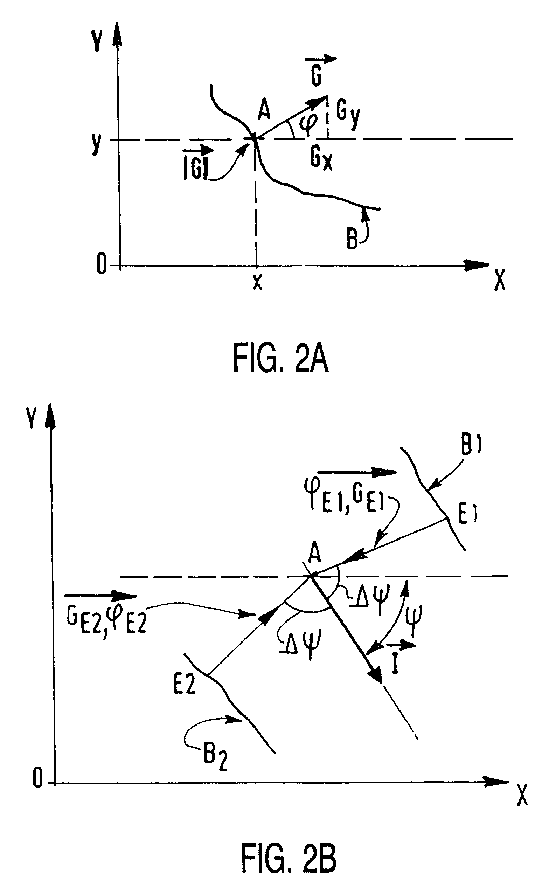

A cet effet en référence à la FIG.2A, par exemple pour la détection d'un objet filiforme qui est une ligne de bord d'un objet quelconque dans l'image originale J, les caractéristiques locales orientées d'intensité sont favorablement le module du gradient d'intensité $\|\overrightarrow{G}\|$ en A, et l'orientation φ du vecteur gradient $\overrightarrow{G}$ calculé par rapport à l'un des axes de coordonnée $\overrightarrow{OX}$. Ces calculs peuvent être effectués favorablement à titre d'exemple, par balayage conventionnel systématique de l'image originale, au moyen de filtres de dérivation des valeurs d'intensité appelés filtres de Sovel qui déterminent la pente notée Gx des valeurs d'intensité à partir d'un pixel donné A dans la direction $\overrightarrow{OX}$, et la pente notée Gy des valeurs d'intensité à partir du même pixel A dans la direction $\overrightarrow{OY}$.

Les composantes du vecteur gradient, ou pentes d'intensité, Gx et Gy fournissent, à l'issue de l'étape 20 : le module du gradient d'intensité : $\|\overrightarrow{G}\| = \sqrt{G_x^2 + G_y^2}$

l'angle φ que fait le vecteur gradient $\overrightarrow{G}$ avec l'axe $\overrightarrow{OX}$ pris comme repère : φ = Arctg (Gy/Gx)

On dispose ainsi d'"ETATS" relatifs aux pixels de l'image d'origine J, qui forment un "champ de caractéristiques locales orientées d'intensité", ou champ d'ETATS, ou champ de vecteurs d'intensité formant une image d'ETATS.

Dans le cas où l'acquisition d'image a été faite en trois dimensions, alors le gradient est calculé dans un volume au lieu d'être calculé sur un plan, et la suite du traitement est adapté à ces données de toute manière automatique connue de l'homme du métier.

L'invention n'est pas limitée à la détection des lignes de bord. Toute ligne peut être détectée de manière automatique pourvu qu'on associe à chaque localisation de pixels dans l'image un vecteur d'intensité, défini par son module et son angle d'orientation, et qui est descriptif de la ligne dans son environnement.

En référence à la FIG.2B, dans un second exemple, on peut chercher à détecter des lignes médianes de vaisseaux sanguins dans un artériogramme. A cet effet, on peut par exemple d'abord déterminer les lignes de bords des vaisseaux par une méthode connue des gradients. On peut ainsi déterminer deux points E1, E2 de bords opposés B1, B2 d'un vaisseaux dont on a calculé respectivement le vecteur gradient $\overrightarrow{G}_{E1}$ associé à un angle $\varphi_{E1}$, et le vecteur gradient $\overrightarrow{G}_{E2}$ associé à un angle $\varphi_{E2}$. Un point de la ligne médiane du vaisseaux est alors A(x,y) situé au point d'intersection des directions des vecteurs gradient $\overrightarrow{G}_{E1}$, $\overrightarrow{G}_{E2}$. Ce point est muni de caractéristiques locales orientées constituées par son intensité I(x,y) calculée ou mesurée, et par un angle ψ que fait la bissectrice des vecteurs gradients $\overrightarrow{G}_{E1}$ et $\overrightarrow{G}_{E2}$ avec le repère $\overrightarrow{OX}$. On définit ainsi dans l'étape 20 pour les points médians potentiels, une image d'ETATS formée d'un "champ de caractéristiques locales orientées d'intensité" ou champ d'ETATS ou champ de vecteurs d'intensité,

En référence à la FIG.3, on peut choisir pour simplifier les calculs de discrétiser l'angle φ ou ψ du vecteur d'intensité considéré, par exemple selon des directions $\Theta_1$ à $\Theta_8$ et $\Theta_1 + \pi$ à $\Theta_8 + \pi$, de π/8 en π/8.

D'une manière générale, un ETAT est défini au moins par une localisation x,y et un vecteur d'intensité $\overrightarrow{V}$ dont on utilise deux composantes qui sont le module d'intensité $\|\overrightarrow{V}\|$ du vecteur et un angle $\Theta$ d'orientation de $\overrightarrow{V}$ par rapport à un repère $\overrightarrow{OX}$, de préférence discrétisé.

3) Une étape 30 de chaînage des pixels appartenant à un objet filiforme de l'image d'origine. Le chaînage est une opération qui consiste à déterminer à partir d'un pixel donné, de proche en proche, un chemin formé de pixels d'un objet filiforme qui est le plus long et le plus régulier possible dans l'image d'origine. A cet effet, on détermine d'abord, pour un pixel donné, un pixel prédécesseur (ou antécédent) qui appartient à un tel chemin le plus long et le plus régulier possible, puis on détermine à partir de ce prédécesseur un prédécesseur du prédécesseur appartenant à ce chemin. On associe ensuite de proche en proche tous les pixels ayant des ETATS qui peuvent être trouvés avec cette condition, et on obtient une chaîne de pixels représentant au mieux l'objet filiforme correspondant dans l'image d'origine. On donne ci-après un critère de sélection qui permet de déterminer, à partir d'un ETAT lié à un pixel donné, l'ETAT prédécesseur, s'il en existe, lié à un pixel prédécesseur qui fait partie d'un tel chemin le plus long et le plus régulier possible. A partir d'un ETAT lié à un pixel donné, ce critère élimine les ETATS liés à des pixels prédécesseurs potentiels qui conduiraient à la construction de chemins courts et/ou irréguliers, et détermine, s'il en existe, un ETAT lié à un pixel prédécesseur potentiel qui permet de construire le chemin le plus long et régulier possible.

Selon l'invention, vis-à-vis de l'état de la technique, dans le but d'améliorer la détection des objets filiformes, on a ainsi posé des contraintes plus sévères d'appariement d'un ETAT donné et d'un ETAT antécédent, tout en imposant que l'opération de chaînage 30 se déroule au moyen d'un nombre de sous-étapes aussi faible que possible, de manière automatique. Les problèmes sont résolus par la mise en oeuvre d'un filtrage de l'image d'ETATS avec un filtre appliqué en un pixel donné ayant un ETAT i, ce filtre étant défini par un noyau exprimé selon la formule suivante :

$$\Sigma \ \beta \ P(j) \ \exp \ (- C_{ij}) \ , \ \text{où} \ C_{ij} = \Sigma \ a_{lm} \qquad (1a)$$

d'où il résulte un critère de sélection d'un ETAT prédécesseur potentiel d'un ETAT donné exprimé par :

$$Q(i) = \Sigma \ \beta \ P(j) \ \exp(-C_{ij}) \qquad (1b)$$

où $Q(i)$ est la valeur d'intensité filtrée d'un ETAT i relatif au pixel donné, par exemple la valeur de $\|\vec{V}\|$ en i après filtrage notée $\|\vec{V}_i\|_F$ ; où $P(j)$ est la valeur d'intensité non filtrée d'un ETAT j relatif à un pixel antécédent potentiel, par exemple la valeur non filtrée de $\|\vec{V}\|$ en j, notée $\|\vec{V}_j\|$ ; où $a_{lm}$ est une mesure de disparité entre des ETATS adjacents, noté l,m, situés sur le chemin reliant i à j ; où $C_{ij}$ est le coût du chemin reliant i à j obtenu en évaluant une somme $\Sigma$ des disparités entre les ETATS adjacents situés sur le chemin reliant i à j. Les chemins retenus sont déterminés par l'optimisation du critère (1) qui est obtenue lorsque le coût du chemin $C_{ij}$ est petit et la densité des ETATS sur ce chemin est grande. L'optimisation de ce critère permet de déterminer ledit chemin le plus long et le plus régulier.

Il apparaît que la mise en oeuvre du critère (1) est trop consommatrice en temps de calcul. C'est pourquoi le procédé selon l'invention propose la mise en oeuvre du critère récursif suivant :

$$Q(i) = \beta \ P(i) + \alpha Q(j) \qquad (2)$$

qui sur le plan mathématique est complètement équivalent au critère (1), comme peut le déduire facilement l'homme du métier. Le filtrage au moyen du critère (2) est un algorithme récursif qui effectue une somme de P (i) qui est l'ETAT i non filtré par exemple $\|\vec{V}_i\|$, et de Q(j) qui est un ETAT filtré lié à un pixel j prédécesseur retenu noté $\|\vec{V}_j\|_F$ pondéré par un facteur de probabilité d'appariement $\alpha = \alpha_{ij}$, pour fournir Q(i) qui est l'ETAT i filtré par exemple $\|\vec{V}_i\|_F$. Le critère 2) est mis en oeuvre au moyen d'un nombre d'opérations réduit vis-à-vis du critère 1) comprenant, en référence à la FIG.1B des sous-étapes de :

définition 31, pour deux ETATS donnés i et j, d'une probabilité d'appariement $\alpha_{ij}$ que l'on écrit : $\alpha_{ij} = \exp$ (- $a_{ij}$) où $a_{ij}$ est une mesure de disparité entre deux ETATS i,j donnés ;
initialisation 32 du critère Q(i) localement selon la formule Q(i) = $\beta$.P(i) où Q(i) est la valeur d'intensité de l'ETAT i filtré, notée $\|\vec{V}_i\|_F$, où $\beta$ est une constante et ou P(i) est la valeur d'intensité de l'ETAT i non encore filtré, notée $\|\vec{V}_i\|$,
balayage 33 de l'image des ETATS, d'une manière conventionnelle selon au moins une direction notée $\vec{Z1}$,
recherche 34, dans la zone déjà balayée, d'un ETAT prédécesseur, noté ETAT k(i), pour lequel le critère Q(i) est maximal,
stockage de l'ETAT k(i) correspondant à ce maximum.

Le filtrage selon le critère Q(i) détecte des ETATS continus, c'est-à-dire un champ de vecteurs continu. Par exemple dans le cas de la détection des bords, ce filtrage détecte les champs de gradients continus. Ce filtrage détermine l'ETAT prédécesseur k(i) le plus probable qui doit être lié à l'ETAT i, de manière automatique et à moindre coût.

En référence à la FIG.4A, pour rendre l'étape de chaînage automatique, l'image des ETATS est balayée automatiquement selon au moins une direction. Par exemple un balayage conventionnel peut être effectué selon les lignes dans la direction $\vec{Z1}$ parallèlement à l'axe $\vec{OX}$, du haut à gauche vers le bas à droite, dans le sens CAUSAL, dans l'image des ETATS. Ce balayage permet de déterminer l'ETAT prédécesseur k(i) dans la région de l'image déjà balayée, qui se situe plus haut ou plus à gauche que l'ETAT courant i balayé.

De préférence en référence à la FIG.4B, après un premier passage CAUSAL selon $\overrightarrow{Z1}$ parallèle à $\overrightarrow{OX}$, l'image des ETATS est ensuite balayée automatiquement selon les lignes dans la direction $\overrightarrow{Z2}$ ANTICAUSALE, du bas à droite vers le haut à gauche de l'image des ETATS, parallèlement à $\overrightarrow{OX}$. Ce second balayage permet de déterminer un ETAT h(i) successeur de l'ETAT courant i balayé.

De préférence, en référence aux FIGS 4C et 4D, des balayages systématiques causaux et anticausaux sont encore effectués selon des directions $\overrightarrow{Z3}$ et $\overrightarrow{Z4}$ perpendiculaires aux directions $\overrightarrow{Z1}$ et $\overrightarrow{Z2}$ des premiers balayages. Dans l'exemple cité où les premiers balayages systématiques sont faits selon les lignes parallèles à l'axe $\overrightarrow{OX}$, on effectue les seconds balayages systématiques selon des colonnes parallèles à l'axe $\overrightarrow{OY}$, de manière CAUSALE ET ANTICAUSALE.

En référence à la FIG.2, une des caractéristiques du champ d'ETAT étant un angle $\Theta$ d'un vecteur $\overrightarrow{V}$ repéré par rapport à l'axe $\overrightarrow{OX}$ par exemple, on détermine un voisinage dans la région d'image d'ETATS déjà balayés qui est constitué par un secteur angulaire de recherche noté NB centré sur l'état i balayé et qui fait un angle $\pm\Delta\Theta$ autour de la direction $\Theta$ du vecteur $\overrightarrow{V}$. Grâce à ce voisinage NB, on peut rechercher le meilleur ETAT voisin dans un champ de vecteurs continu. Dans le cas de détection des bords, on cherche un ETAT j qui maximise le critère 2), c'est-à-dire dont l'angle $\Theta$ est proche de celui de l'ETAT i donné, et pour lequel la mesure de disparité $a_{ij}$ en coopération avec la valeur du module du gradient $\|\overrightarrow{G_j}\|_F$ en j et la valeur du module du gradient $\|\overrightarrow{G_i}\|$ en i permettent d'obtenir $\|\overrightarrow{G_i}\|_F$ maximal en appliquant le critère 2).

On peut favorablement choisir un secteur angulaire délimité par $\pm\Delta\Theta = \pm\pi/8$, lorsque l'angle $\Theta$ est discrétisé de $\pi/8$ en $\pi/8$. Selon l'orientation $\Theta$ du vecteur $\overrightarrow{V_i}$ à l'ETAT courant i, on dispose d'autant de secteurs de recherche NB que d'orientations $\Theta$ discrétisées telles que montrées sur la FIG.3.

Dans le secteur de recherche NB, pour que la mesure de disparité $a_{ij}$ reste raisonnable, le voisinage est également limité par une distance maximale R de l'ETAT voisin examiné j vis-à-vis de l'ETAT courant i balayé. Il peut, par exemple, dans ce cas, se trouver 10 à 100 ETATS j voisins possible dans le secteur angulaire NB déterminé. A cet effet, pour chaque ETAT courant i balayé, 10 à 100 essais correspondants sont effectués, dans la région déjà balayée et sur les ETATS j contenus dans le voisinage déterminé NB en appliquant le critère 2). Parmi tous les ETATS j essayés dans le voisinage de recherche NB on retient celui qui maximise le critère Q(i), et on le note k(i).

D'une manière générale le chaînage consiste à trouver, pour un ETAT courant i, dans une région de l'image des ETATS déjà balayée, un ETAT k(i) parmi les ETATS j d'un secteur de recherche NB dont la direction $\Theta$ est déterminée en dépendance de l'angle $\Theta$ lié à l'ETAT i courant, tel que les caractéristiques locales orientées liées à k(i) permettent d'optimiser le critère 2)

selon l'expression :

$$\|\overrightarrow{V_i}\|_F = \beta \|\overrightarrow{V_i}\| + \alpha_{ij} \|\overrightarrow{V_j}\|_F \qquad 3)$$

Il en résulte que le meilleur ETAT voisin k(i) de l'ETAT donné i, dans ce voisinage, selon ce balayage et par l'application de ce critère, est localisé à une distance inférieure à R et est caractérisé par un vecteur d'intensité dans un champ continu de vecteurs et est appelé prédécesseur k(i) pour être chaîné à l'ETAT i. On stocke, dans la sous-étape 35, l'information que cet ETAT k(i), qui produit Q(i) filtré maximal pour l'ETAT i, est le meilleur antécédent ou prédécesseur de l'ETAT i.

Après les sous-étapes 33 à 35 commençant par un balayage CAUSAL 33, on effectue une répétition des sous-étapes 33 à 35 en commençant par un balayage ANTICAUSAL, ce qui permet de déterminer par la même méthode un ETAT successeur qui est stocké et noté h(i). On effectue ensuite des répétitions des sous-étapes 33 à 35 avec des balayages causaux et anticausaux perpendiculaires, et on cherche s'il existe un ETAT j, toujours dans le voisinage NB prédéterminé, qui fournirait une valeur Q(i) améliorée. Dans ce cas, c'est cette nouvelle valeur d'ETAT j qui est stockée pour k(i) ou h(i), et la valeur trouvée dans les sous-étapes 33 à 35 avec des balayages précédants est oubliée.

L'invention n'est pas limitée à apparier des ETATS déterminés à la même résolution. On peut favorablement filtrer l'image originale à diverses résolutions, appelées échelles $\sigma$, pour former un ensemble d'images multiéchelles, et dans ce cas, les meilleurs ETATS voisins sont recherchés aux différentes échelles, les échelles les plus proches étant néanmoins privilégiées, par exemple en appliquant sur la valeur Q(j) dans l'équation 2), un poids approprié.

Le chemin déterminé par la méthode de chaînage proposée possède des propriétés spécifiques ; c'est pourquoi, on a donné au filtrage qui permet d'obtenir ce chemin le nom de FILTRAGE GEODESIQUE par analogie à une notation géographique. La détermination de ce chemin permet de combler des petites coupures de l'objet filiforme dans l'image du fait que le meilleur ETAT voisin trouvé dans le voisinage déterminé n'est pas obligatoirement l'ETAT qui est à la distance la plus courte, mais l'ETAT qui est à une distance courte en dépendance de caractéristiques locales orientées d'intensité de faible disparité. En revanche, le procédé ne permet pas de combler des grandes coupures ce qui permet de séparer deux objets filiformes différents. Ce filtrage GEODESIQUE est "contraint" par les conditions de localisation, d'angle, et d'intensité et occasionnellement d'échelle qui sont liées au balayage, au secteur de recherche, et au critère 2) proposé, et rehausse les objets allongés ou filiformes.

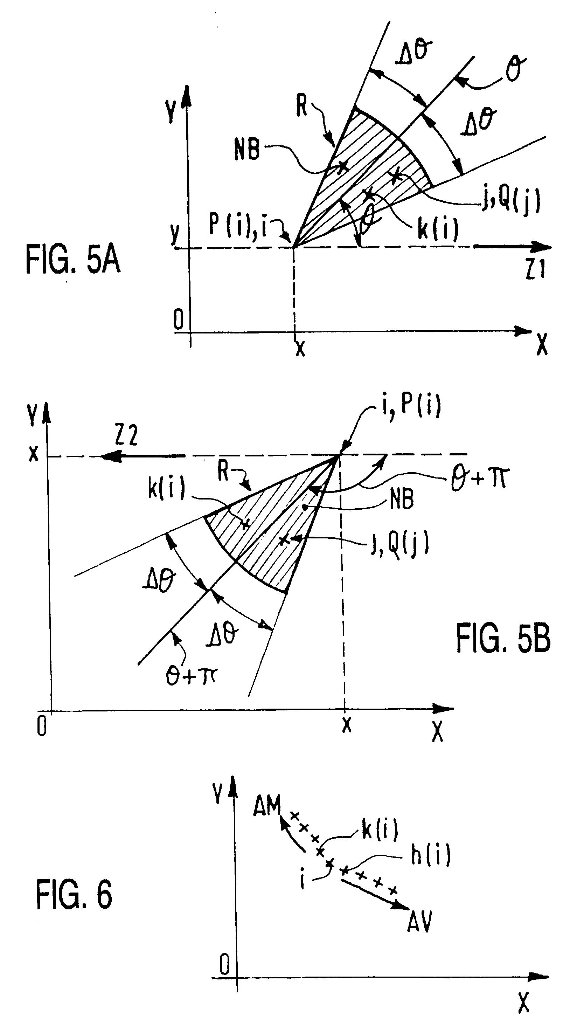

4) Une étape 40 de pistage (back-tracking) automatique. Dans cette étape, on chaîne les ETATS correspondant aux différents objets filiformes de l'image. En référence à la FIG.6 le pistage automatique comprend une première détermination d'un point i de l'image pour lequel on a trouvé la valeur Q(i) la plus grande. On crée d'une part une chaîne amont AM avec le prédécesseur, puis le prédécesseur du prédécesseur etc... et on opère de proche en proche jusqu'à ce que l'on ne trouve plus de prédécesseur. Et d'autre part, à partir de ce même point i, on crée une chaîne aval AV avec le successeur, le successeur du successeur etc... et on opère de proche en proche jusqu'à ce qu'on ne trouve plus de successeur. Puis le pistage automatique comprend une seconde détermination d'un autre point de l'image pour lequel on a trouvé une valeur Q(i) aussi grande que possible, à partir duquel on crée une nouvelle chaîne amont et une nouvelle chaîne aval. Des pistages automatiques sont faits tant que l'on trouve des points de départ de chaînage ayant des valeurs Q(i) suffisamment grandes : on peut se fixer un seuil. Des chemins déjà visités ne sont pas revisités. A cet effet, les nouveaux points de départ de chaînage possible ne sont retenus que s'ils sont à une distance suffisante prédéterminée des chaînes déjà existantes. Ainsi, des objets filiformes qui se croisent sont détectés individuellement dans l'image. Il ne peut y avoir d'ambiguïté dans la segmentation des objets. Dans une étape de visualisation 50, la FIG.4B montre dans une image K le résultat du chaînage des objets filiformes de l'image J de la FIG.4A.

## DISPOSITIF

En référence à la FIG.8, à titre d'exemple, un appareil de radiographie numérisée comprend une source 1 de rayons X ; une table mobile 2 pour recevoir un patient ; un dispositif intensificateur d'image 3 couplé à un tube vidéo 4, qui fournit des données à un système 8 de traitement numérique d'image comprenant un microprocesseur 5. Ce dernier comprend plusieurs sorties dont une sortie 6 couplée à un moniteur 7 pour la visualisation de l'image radiographique ou des images d'intensité.

L'image radiographique numérisée peut contenir 512 x 512 ou 1024 x 1024 pixels codés sur 8bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé. L'image numérisée peut être obtenue en mode fluoroscopique. L'invention peut trouver son application particulièrement dans le traitement d'images artériographiques.

Le traitement de l'image numérique selon le procédé décrit plus haut est mis en oeuvre dans ses différentes étapes et opérations dans le système 5. Les données sont stockées dans une zone mémoire non représentée et affichées si besoin sur un moniteur 7. Des moyens d'enregistrement également notés 7 peuvent être en outre utilisés. La numérisation de l'image à traiter apporte un avantage dans la mise en oeuvre du présent procédé.

## Revendications

1. Procédé de traitement d'image incluant l'acquisition (10) d'une image d'intensité (J) formée d'une matrice de points (A) munie de valeurs d'intensité non binaires, représentant des objets filiformes, et incluant des étapes de détection des objets filiformes comprenant :

   une détermination automatique (20) d'un champ de vecteurs d'intensité ($\vec{V}$) formant une image d'ETATS constitués par des caractéristiques de grandeurs et d'angles $[\|\vec{V}\|, \theta]$ des vecteurs d'intensité aux différents points (A) de l'image d'intensité,
   une opération de chaînage (30) des points d'un objet filiforme individuel au moyen d'un filtrage automatique [Q(i)] de l'image des ETATS qui effectue une sélection d'un champ dense et continu de vecteurs d'intensité correspondant à des points de l'objet filiforme.

2. Procédé selon la revendication 1 selon lequel l'opération de chaînage (30) par filtrage automatique de l'image des ETATS comprend :

   la définition d'un critère [Q(i)] de filtrage qui fournit la valeur filtrée de la grandeur $[\|\vec{V}_i\|_F]$ du vecteur d'intensité en un point d'ETAT(i) donné de l'image des ETATS comme une somme de la grandeur $[P(i), \|\vec{V}_i\|]$ non filtrée du vecteur d'intensité en ce point et de la grandeur $[Q(j), \|\vec{V}_j\|_F]$ filtrée du vecteur d'intensité en un point d'ETAT (j) voisin pondérée par un coefficient de probabilité ($\alpha_{i,j}$) d'appariement des points d'ETAT (i, j) en dépendance d'une mesure de leur disparité ($a_{ij}$),
   la recherche d'un point [k(i) ; h(i)] parmi des points d'ETAT (j) voisins dont les caractéristiques de grandeur et d'angle des vecteurs d'intensité maximise le critère [Q(i)] de filtrage au point d'ETAT donné (i).

3. Procédé selon la revendication 2, selon lequel l'opération de chaînage comprend : un balayage (33) systématique et automatique de l'image des ETATS selon au moins une direction ($\vec{Z1}$) ; en un point d'ETAT (i) courant, une recherche (34) dans la zone de l'image déjà balayée, d'un point d'ETAT prédécesseur [k(i)] et/ou successeur [h(i)] pour lequel le critère [Q(i)] est maximal ; et le stockage desdits points d'ETAT prédécesseur [k(i)] et/ou successeur [h(i)] comme points à chaîner avec ledit point courant (i).

4. Procédé selon la revendication 3, selon lequel, l'opération de recherche (34) d'un ETAT prédécesseur [k(i)] et/ou successeur [h(i)] d'un ETAT donné (i) dans l'image des ETATS comprend la détermination d'un voisinage de recherche (NB) formé d'un secteur angulaire centré sur ledit point d'ETAT donné (i), et qui couvre un angle donné ($\pm \Delta\Theta$) autour de l'angle d'orientation ($\Theta$) du vecteur d'intensité ($\vec{V}_i$) relatif au point d'ETAT donné (i), et la détermination dans ce voisinage de recherche, d'un point d'ETAT [k(i) ; h(i)] parmi les points d'ETATS(j) du secteur de recherche pour lequel le critère est maximal.

5. Procédé selon la revendication 4, selon lequel le voisinage de recherche (NB) est limité en outre à une zone de rayon prédéterminé (R) autour du point courant (i).

6. Procédé selon l'une des revendications 1 à 5, qui comprend en outre une opération de pistage (40) des points d'ETATS de différents objets filiformes individuellement.

7. Procédé selon la revendication 6, selon lequel, l'opération de pistage comprend la détermination d'un point d'ETAT (i) d'intérêt, par l'examen de la valeur [Q(i)] obtenue par la mise en oeuvre du critère de filtrage, comme point de départ d'une opération de chaînage ; le chaînage de son prédécesseur [k(i)] et de son successeur [h(i)] et de proche en proche de tous les prédécesseurs des prédécesseurs et successeurs des successeurs s'il s'en trouve, de part et d'autre (AM,AV) du point de départ, de manière à former une chaîne de points représentatifs de l'objet filiforme ; le renouvellement de ces opérations pour pister les différents objets filiformes de l'image avec la condition que les point de départ sont choisis non confondus avec des points d'une chaîne déjà existante.

8. Appareil d'imagerie médicale incluant des moyens pour mettre en oeuvre un procédé selon l'une des revendications 1 à 7, comprenant un système d'acquisition (4) de données de représentation d'une image sous forme d'une matrice bidimensionnelle de points ayant des valeurs d'intensités non binaires, repérés par leurs coordonnées dans la matrice,

un système de traitement d'image (8) comprenant un microprocesseur (5) ayant accès aux données de représentation de l'image et munis de moyens pour mettre en oeuvre les étapes du procédé,
et un système d'affichage et/ou d'enregistrement (7) des données d'image acquises et/ou traitées par le procédé.

—10

—20

—30

—40

—50

## FIG. 1A

—31

—32

—33

—34

—35

## FIG. 1B

FIG. 2A

FIG. 2B

FIG. 3

FIG. 4A

FIG. 4B

FIG. 4C

FIG. 4D

FIG. 5A

FIG. 5B

FIG. 6

## FIG. 7A

## FIG. 7B

## FIG. 8

**Office européen des brevets**

## RAPPORT DE RECHERCHE EUROPEENNE

Numéro de la demande

EP 98 20 1523

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE 43 04 860 A (SIEMENS AG) 18 août 1994<br>* colonne 1, ligne 22 - ligne 31 *<br>* colonne 2, ligne 21 - colonne 4, ligne 19 *<br>----- | 1-8 | G06T7/00<br>G06T5/00 |

**DOMAINES TECHNIQUES RECHERCHES** (Int.Cl.6)

G06T

Le présent rapport a été établi pour toutes les revendications

| Lieu de la recherche | Date d'achèvement de la recherche | Examinateur |
|---|---|---|
| BERLIN | 28 août 1998 | Burgaud, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03 82 (P04C02)